# EUROPÄISCHE PATENTSCHRIFT

(11) **EP 0 663 455 B1**
(45) Veröffentlichungstag und Bekanntmachung des Hinweises auf die Patenterteilung: **17.11.1999**
(21) Anmeldenummer: 94111751.7
(22) Anmeldetag: 28.07.1994
(51) Int. Cl.: C23C 8/40, C21D 1/46

(54) **Filtereinheit und Vorrichtung zum Entschlammen von Salzbädern**
Filter unit and device for desludging salt baths
Unité de filtre et dispositif pour l'enlèvement des boues provenant des bains de sel

(30) Priorität: 13.01.1994 DE 4400755
(43) Veröffentlichungstag der Anmeldung: 19.07.1995
(73) Patentinhaber: Houghton Durferrit GmbH, 68169 Mannheim (DE)
(72) Erfinder: Wahl, Georg, D-63517 Rodenbach (DE); Kremer, Matthias, Dr., D-65185 Wiesbaden (DE); Sato, Tokuo, Kanagawa-Prefecture (JP)
(74) Vertreter: Hirsch, Hans-Ludwig, Dr.

(56) Entgegenhaltungen:
- DE-A- 2 731 167
- DE-A- 3 836 939
- DE-A- 4 337 374
- GB-A- 2 046 611

## Beschreibung

Die Erfindung betrifft eine Filtereinheit und Vorrichtung zum Entschlammen von Salzbädern, die zumindest teilweise vom Salzbad umspült ist und mit dem oberen Ende eines Steigrohrs in Wirkverbindung steht, wobei die zu entschlammende Badflüssigkeit, beispielsweise mit Hilfe eines Druckluftstroms, durch das Steigrohr in Richtung auf die Filtereinheit zu gedrückt wird.

Salzbäder werden in großem Umfang, beispielsweise zum Härten oder zum Nitrieren von metallischen Werkstoffen, insbesondere von Eisenwerkstoffen, verwendet. Derartige Salzbäder bestehen überwiegend aus Karbonaten und Cyanaten der Alkalimetalle, teilweise sind auch Alkalicyanide enthalten. Solche Salzschmelzen werden normalerweise bei einer Betriebstemperatur von 560 bis 600°C betrieben.

Während der Behandlung von Bauteilen aus Eisenwerkstoffen verschlammen diese Bäder in unterschiedlich hohem Maße, und zwar dadurch, daß anhaftende Stahlpartikel, wie z.B. Drehspäne oder Schleifstaub, sich auf dem Boden des Behandlungsgefässes ansammeln oder in fein verteilter Form im Schwebezustand verbleiben. Desgleichen führt die Behandlung von verzunderten oder von unbearbeiteten Oberflächen (Guß- oder Schmiedehaut) zur Verunreinigung des Bades. Schließlich wird Schlammanteil auch dadurch gebildet, daß von Chargierhilfsmitteln wie Körben oder Gestellen, nach mehrfacher Behandlung Nitridpartikel abblättern und im Bad verbleiben. Der so entstehende "Schlamm" besteht überwiegend aus Eisennitrid und -oxid.

Andere Salz bäder, wie z.B. Abkühlbäder auf Hydroxidbasis, werden durch die Bildung von unlöslichen Karbonaten immer dickflüssiger, wodurch der Schmelzpunkt der Bäder steigt und die Abkühlwirkung sich vermindert. Daher müssen auch solche Salzbäder gereinigt werden.

Da der Schlammgehalt des Nitrierbades die Reproduzierbarkeit der zu erzielenden Nitrierergebnisse stark beeinflußt, ist eine laufende Säuberung des Bades sehr wichtig. In der Praxis werden dazu verschiedene Entschlammungsvorrichtungen benutzt. Allen bisherigen Systemen ist dabei gemeinsam, daß zur Entschlammung eine Betriebsunterbrechung erforderlich ist, d.h. die Entschlammung muß im unbeschickten Bad vorgenommen werden.

Aus der DE-OS 29 11 222 ist eine Vorrichtung zur kontinuierlichen Entschlammung von Salzbädern bekannt, die aus einer Filtereinheit, einer in das Salzbad eintauchenden Pumpe und einem Steigrohr besteht. Die Filtereinheit ist hierbei außerhalb des Salzbades angeordnet.

Bekannt ist auch eine Vorrichtung zur diskontinuierlichen Entschlammung von der Metallbehandlung dienenden Salzbädern, bestehend aus einem Förderrohr, einer Luftzuleitung und einer Filtereinheit (DE 38 36 939) bei der als Filtermaterialien Eisen-Drahtgewebe mit Maschenweiten von 0,05 bis 0,5 mm oder Glaswolle verwendet wird.

Filtergewebe aus Eisendraht hat jedoch den Nachteil, daß der Eisenwerkstoff durch das Salzbad selbst und auch durch die im Filterschlamm enthaltenen Stoffe stark angegriffen wird, beispielsweise versprödet, so daß das Maschengewebe bereits nach wenigen Betriebsstunden reißt oder ausbricht bzw. löchrig wird, mit dem Ergebnis, daß sich der zurückgehaltene Filterschlamm in das gereinigte Bad ergießt und dieses schlagartig unbrauchbar macht.

Weiterhin ist die Verwendung von anorganischen Formwerkstoffen, insbesondere von Glas- oder Steinwolle zur Reinigung von Salzschmelzbädern, insbesondere zum Entfernen von schädlichen Schwebstoffen und abgesetztem Schlamm in Bädern für die Gefügebehandlung von eisenhaltigen Werkstoffen bekannt (DE 27 31 167). Diese Glas- oder Steinwolle-Filter haben unter anderem jedoch den Nachteil, daß sie als verschmutzte Filter nur schwer zu entsorgen sind, weshalb sie für die industrielle Anwendung aus Kostengründen ausscheiden.

Schließlich ist ein Filtermittel mit einem elektrogalvanisch aufgebauten Filtermedium bekannt (DGM 92 00 734.1), wobei das Filtermedium aus Nickel oder einer Nickellegierung hergestellt ist und eine Stärke von 0,1 bis 0,2 mm aufweist. Dieses bekannte, als Siebdruckgewebe ausgebildete Filtermedium, eignet sich jedoch nur für mehrstufige Trenneinrichtungen, beispielsweise als Bandfilter, das Hydrozyklonen nachgeschaltet ist.

Der vorliegenden Erfindung liegt die Aufgabe zugrunde, sowohl eine Filtereinheit zum Entschlammen von Salzbädern zu schaffen, deren Lebensdauer wesentlich über derjenigen der herkömmlichen Filtereinheiten liegt, als auch die mit dieser Filtereinheit korrespondierende Vorrichtung, die besonders preiswert herstellbar ist und die mit hohem Wirkungsgrad arbeitet.

Diese Aufgabe wird erfindungsgemäß dadurch gelöst, daß das von einem Filterkorb umschlossene, aus einem Maschendraht gebildete Filtergewebe aus einem Nichteisenmetall, vorzugsweise aus einer Aluminium-, Nickel- oder Titanbasislegierung gefertigt ist. Erfindungsgemäß sind dabei alle Legierungen für das Filtergewebe geeignet, in denen ein beliebiges Metall - ausgenommen Eisen - den größten Einzelgehalt darstellt. Die für die Filtereinheit erforderliche Vorrichtung ist aus einem Rahmen gebildet, der in Richtung auf den Boden des Salzbades zu zu einem Trichter ausgeformt ist, dessen spitzes, unteres Ende mit einer über eine Stopfenstange verschließbare Öffnung versehen ist. Weitere Ausführungen und Merkmale sind in den abhängigen Patentansprüchen 2 bis 5 beschrieben und gekennzeichnet.

Die Erfindung läßt die verschiedensten Ausführungsmöglichkeiten zu; eine davon ist in den anhängenden Zeichnungen näher dargestellt, und zwar zeigen:

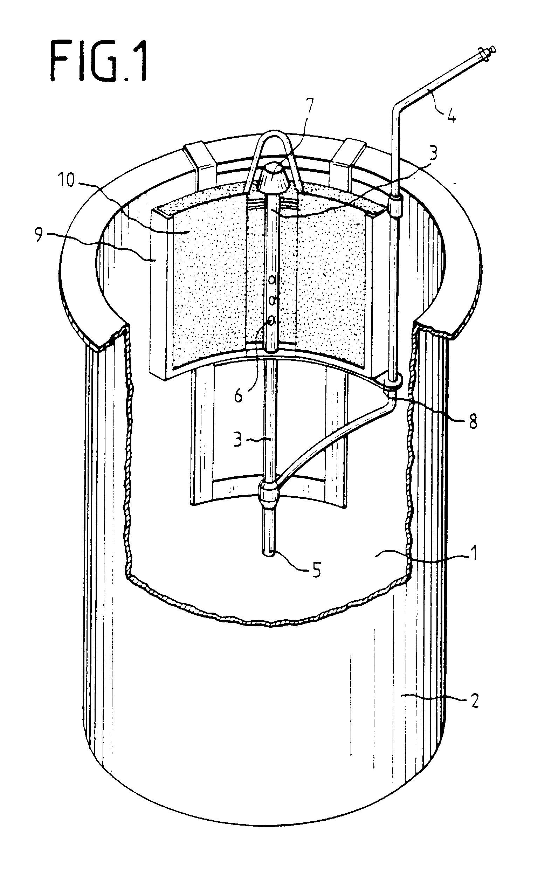

- Figur 1: eine erfindungsgemäße Filtereinheit und Vorrichtung in perspektivischer Ansicht zusammen mit dem dem Salzbadbehälter,
- Figur 2: die perspektivische Darstellung der Filtereinheit selbst gemäß Figur 1,
- Figur 3: die diagrammatische Darstellung eines Entschlammungsvorganges über 34 Chargen, wobei jeweils der Fe-Gehalt der Charge in % angegeben ist,
- Figur 4: eine alternative Ausführungsform einer Filtereinheit zusammen mit der Pumpeneinheit und dem Salzbadbehälter in perspektivischer Darstellung und

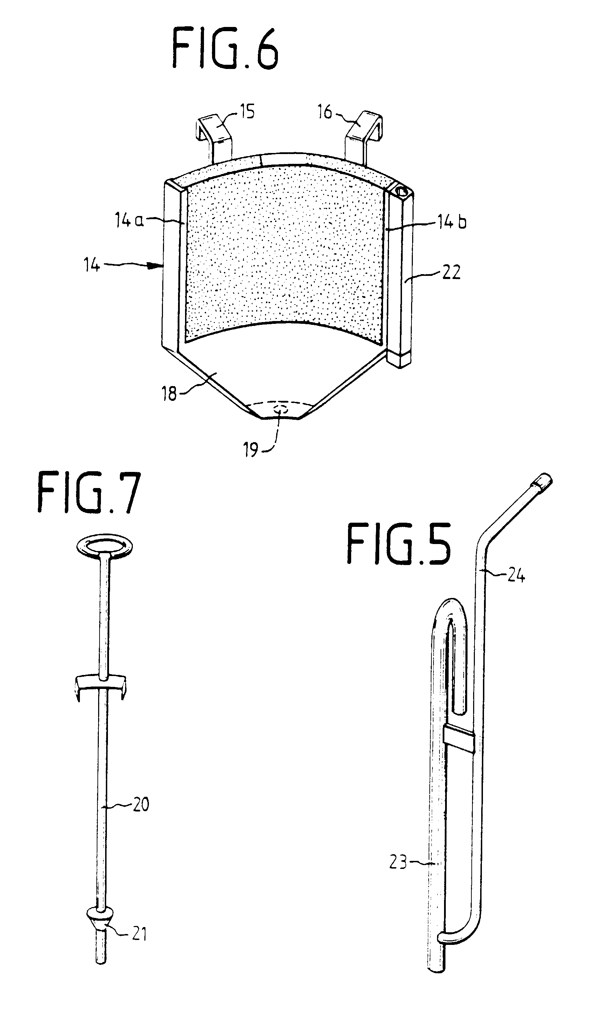

- Figuren 5, 6, 7: die Filtereinheit, die Pumpeneinheit und der Stopfen gemäß der Ausführung nach Figur 4.

Die Salzschmelze 1, die sich in einer Wanne 2 befindet, wird kontinuierlich über ein Steigrohr 3 in die Filtereinheit 9 gefördert, wo ein Leitblech 7 über das obere Ende des Steigrohrs 3 gestülpt ist.

Der Transport der Salzschmelze 1 erfolgt mittels dem in der Salzschmelze aufsteigendem Luftstrom. Die Luftzufuhr erfolgt über die Druckluftzufuhr 4, wobei die Ansaugstutzen 5 den Schlamm von der tiefsten Stelle der Wanne 2 ansaugt. Das Filter wird von einem Anschlag 8 gehalten und ist leicht austauschbar. Unterhalb des Salzbadspiegels ist das Steigrohr 3 mit einigen Bohrungen 6 versehen, die beim Verstopfen des Filters 9 bzw. des oberen Steigrohrendes 3 dem Druckabbau dienen. Die Bohrungen 6 haben beispielsweise Durchmesser von 2 bis 16 mm, je nach Steigrohrdurchmesser und befinden sich unterhalb des Badspiegels.

Der vom Luftstrom nach oben geförderte Schmelzstrom trifft nach dem Austritt aus dem Steigrohr 3 auf die Innenfläche des glockenförmig ausgebildeten Leitbleches 7 und wird von diesem in das Paket aus Aluminium-Maschendraht 10 gelenkt. Nach ihrer Reinigung läuft der durch das Filterpaket 10 sickernde Schmelzstrom wieder in die Salzschmelze zurück.

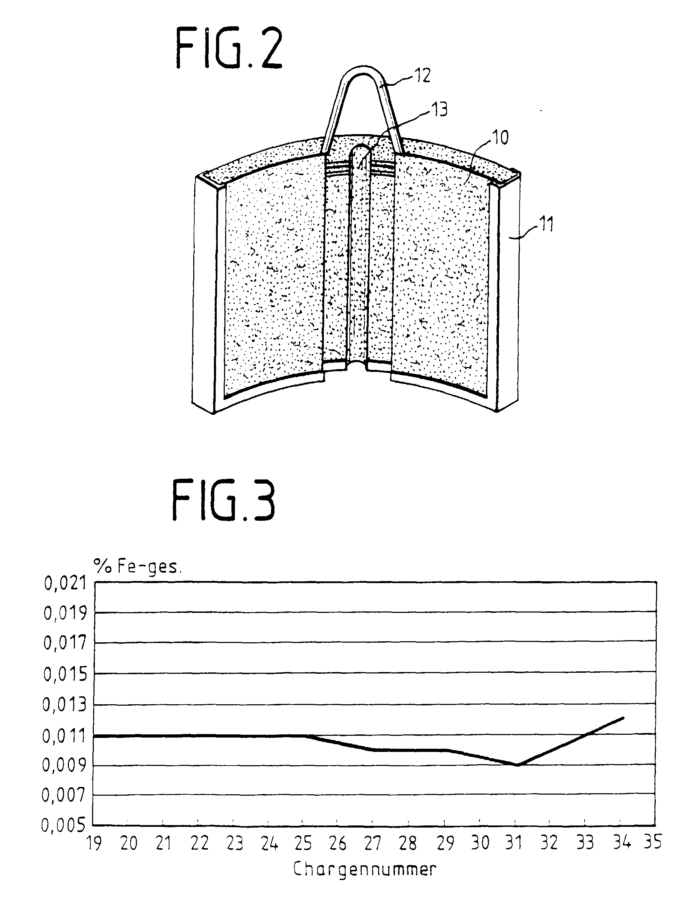

Figur 2 zeigt eine separate Filtereinheit 9, die aus einem kastenartigen Rahmen 11, dem vom Rahmen 11 umschlossenen Filter-Paket 10 von Maschengewebe aus Aluminiumdraht, einem Haltebügel 12 und einer muldenartigen Vertiefung 13 zur Aufnahme des Steigrohrs 3 besteht. Die Filtereinheit 9 läßt sich jederzeit mühelos und ohne Werkzeugnutzung nach oben zu aus dem Bad herausziehen bzw. vom Haltegestell 8 abnehmen.

Figur 3 zeigt das Ergebnis einer Versuchsreihe, bei der das Salzbad mit Hilfe einer Filtereinheit gereinigt wurde, die aus Maschendraht aus Reinaluminium aufgebaut ist, in Form eines Diagramms. Der Kurvenverlauf zeigt, daß die Verschlammung mit Eisenpartikeln, selbst nach der Behandlung von 34 Chargen, außerordentlich gering geblieben ist und bis etwa zur 25. Charge den sehr geringen Wert von 0,011 % Fe aufweist und danach sogar noch eine weitere Phase auf einen noch günstigeren Wert (0,009 % Fe) absinkt und erst zum Schluß wieder auf einen Wert ansteigt, der leicht über dem Ausgangswert liegt. Die bei diesem Versuch benutzte Maschenweite betrug 400 Maschen/cm².

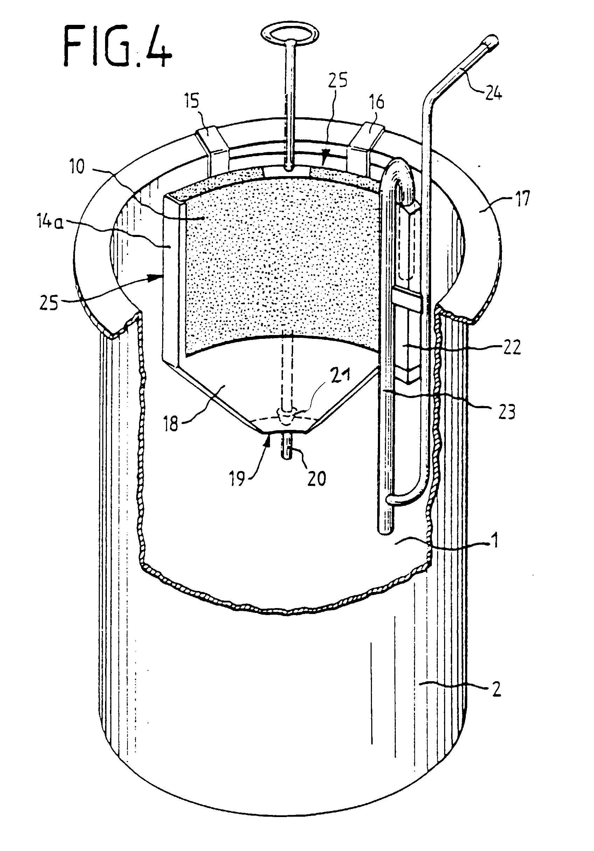

Bei der Ausführungsform nach Figur 4 ist das Filter-paket aus Aluminium-Maschendraht 10 von einem Rahmen 14 gehalten, der seinerseits mit Hilfe der Haken 15, 16 auf dem Rand 17 des Salzbadbehälters 2 abgestützt ist. Der Rahmen 14 umschließt mit seinen beiden Seitenpartien 14a, 14b das matratzenförmig ausgebildete Filterpaket 10 und weist im übrigen einen nach unten zu spitz zulaufenden Blechtrichter 18 auf, der an seinem unteren Ende mit einer Öffnung 19 versehen ist, die mit einer Stopfenstange 20 verschließbar ist, die zu diesem Zweck mit einem Verschlußkegel 21 versehen ist. Die Seitenpartie 14b ist mit einem Sammelkasten 22 ausgestattet, über den die Flüssigkeit, die über das Steigrohr 23 gefördert wird, über die Seitenpartie 14b quer in das Filterpaket 10 einströmen kann. Der unterhalb des Filterpakets vorgesehene Blechtrichter 18 dient zum Auffangen von Filterschlamm, der vom Filterpaket aus nach unten zu absinkt. Der gesammelte Schlamm kann durch Anheben der Stopfenstange 20 über die Öffnung 19 am spitzen unteren Ende des Blechtrichters 18 abgelassen werden. Zum Fördern der Flüssigkeit aus dem Behälter 2 in den Sammelbehälter 22 dient die aus dem Steigrohr 23 und dem Druckluftzufuhrrohr 24 gebildete Pumpe (Ejektorpumpe).

### Auflistung der Einzelteile:

- 1: Salzschmelze
- 2: Salzbadbehälter
- 3: Steigrohr
- 4: Druckluftzufuhr
- 5: Auslaufstutzen
- 6: Bohrungen
- 7: Leitblech
- 8: Ausbildung
- 9: Filtereinheit
- 10: Maschendraht-Paket, Filter-Paket
- 11: Rahmen
- 12: Haltebügel
- 13: maschenförmige Vertiefung
- 14: Rahmen
- 14a, 14b: Seitenpartie
- 15: Haken
- 16: Haken
- 17: Rand
- 18: Blechtrichter
- 19: Öffnung
- 20: Stopfenstange
- 21: Verschlußkegel
- 22: Sammelkasten
- 23: Steigrohr
- 24: Druckluftzufuhrrohr
- 25: Filtereinheit

## Patentansprüche

1. Filtereinheit (9, 25) und Vorrichtung zum Entschlammen von Salzbädern (1) die zumindest teilweise vom Salzbad umspült ist und mit dem oberen Ende eines Steigrohrs (3, 23) in Wirkverbindung steht, wobei die zu entschlammende Badflüssigkeit, beispielsweise mit Hilfe eines Luftdruckstroms, durch das Steigrohr (3, 23) in Richtung auf die Filtereinheit (9, 25) zu förderbar ist, **dadurch gekennzeichnet**, daß das von einem Filterkorb oder einem Filterrahmen (11, 14) umschlossene, aus einem Maschendraht gebildete Filtergewebe-Paket (10) aus einem Nichteisenmetall, vorzugsweise aus einer Aluminium-, Nickel- oder Titanbasislegierung gefertigt ist.

2. Filtereinheit nach Anspruch 1, **dadurch gekennzeichnet,** daß die Zahl der Maschen des Filtergewebe-Pakets (10) zwischen 200 und 800 Maschen/cm², vorzugsweise 400 Maschen/cm², beträgt.

3. Filtereinheit nach den Ansprüchen 1 und 2, **dadurch gekennzeichnet**, daß das Filtergewebe-Paket (10) aus einem hochporösen Nichteisenmetall gefertigt ist.

4. Vorrichtung zum Entschlammen nach Anspruch 1, **dadurch gekennzeichnet**, daß das von einem Rahmen (11, 14) gehaltene Filtergewebe-Paket (10) in Richtung auf den Boden des Behälters (2) für das Salzbad zu zu einem flachen pyramidenstumpfförmigen Trichter (18) ausgeformt ist, dessen spitzes unteres Ende mit einer über eine Stopfenstange (20) verschließbaren Öffnung (19) versehen ist.

5. Vorrichtung nach Anspruch 4, **dadurch gekennzeichnet,** daß der das Filterpaket (10) tragende Rahmen (14 bzw. 14a, 14b) mit einem Sammelkasten (22) korrespondiert, der an einem Seitenteil (14b) angeordnet ist und in das das Steigrohr (23) von oben her einmündet, so daß die geförderte Flüssigkeit aus dem Steigrohr (23) über den Sammelkasten (22) horizontal in das Filterpaket (10) einleitbar ist.

## Claims

1. Filter unit (9, 25) and device for desludging salt baths (1), around which the salt bath at least partly washes and which is in effective contact with the upper end of a riser pipe (3, 23), wherein the bath liquid to be desludged, for example by means of a flow of pressurised air, is transportable through the riser pipe (3, 23) towards the filter unit (9, 25),
characterised in that the screen pack (10), which is formed from a wire mesh and enclosed by a filtering basket or a filter frame (11, 14), is manufactured from a non-ferrous metal, preferably from an alloy based on aluminium, nickel or titanium.

2. Filter unit according to claim 1, characterised in that the mesh number of the screen pack (10) is between 200 and 800 meshes/cm², preferably 400 meshes/cm².

3. Filter unit according to claims 1 and 2, characterised in that the screen pack (10) is manufactured from a highly porous non-ferrous metal.

4. Desludging device according to claim 1, characterised in that the screen pack (10) held by a frame (11, 14), in the direction towards the base of the tank (2) for the salt bath, is formed into a funnel (18) having the shape of a flat truncated pyramid, the lower pointed end of which is provided with an opening (19) which can be closed by a stopper rod (20).

5. Device according to claim 4, characterised in that the frame (14 and 14a, 14b respectively) bearing the screen pack (10) corresponds with a receptacle (22), which is arranged along the side part (14b) and joins the riser pipe (23) from above, so that the transported liquid can be passed from the riser pipe (23) via the receptacle (22) horizontally into the screen pack (10).

## Revendications

1. Unité de filtration (9, 25) et dispositif pour enlever la boue des bains de sel (1) qui est au moins en partie balayé par le bain de sel, et est en liaison active avec l'extrémité supérieure d'un tube ascendant (3, 23), où le liquide du bain à débarrasser de la boue peut être entraîné, par exemple à l'aide d'un courant d'air comprimé, à travers le tube ascendant (3, 23) en direction de l'unité de filtration (9, 25),
caractérisés en ce que
l'ensemble de tissu de filtration formé d'un fil de maille, entouré d'une corbeille de filtration ou d'un bâti de filtration (11, 14) est fabriqué en un métal différent du fer, de préférence un alliage à base d'aluminium, de nickel ou de titane.

2. Unité de filtration selon la revendication 1,
caractérisé en ce que
le nombre de mailles de l'ensemble du tissu de filtration (10) est compris entre 200 et 800 mailles par cm², de préférence 400 mailles/cm².

3. Unité de filtration selon les revendications 1 et 2,
caractérisée en ce que
l'ensemble du tissu de filtration (10) est fabriqué en un métal différent du fer et très poreux.

4. Dispositif pour enlever les boues selon la revendication 1,
caractérisé en ce que
l'ensemble de filtration (10) maintenu par un bâti (11, 14) est formé en direction en direction du sol du récipient (2) pour le bain de sel jusqu'à un entonnoir plat en forme de pyramide tronquée (18) dont l'extrémité inférieure pointue est munie d'une ouverture (19) que l'on peut fermer au moyen d'une barre de bouchage (20).

5. Dispositif selon la revendication 4,
caractérisé en ce que
le bâti (14, selon les cas 14a, 14b) portant l'ensemble de filtration (10 ) correspond à une boîte de collecte (22) qui est disposée sur une partie latérale (14b) et débouche par en haut dans le tube ascendant (23), de manière que le liquide poussé hors du tube ascendant (23) puisse être conduit horizontalement dans l'ensemble de filtration (10) en passant par la boîte de collecte (22).
